Europäisches Patentamt

European Patent Office

Office européen des brevets

(19)

(11) Publication number: **0 040 925**
**B1**

(12) **EUROPEAN PATENT SPECIFICATION**

(45) Date of publication of patent specification: **25.07.84**

(51) Int. Cl.³: **B 23 K  28/00,** B 23 K  7/10,
B 23 K  9/00

(21) Application number: **81302108.6**

(22) Date of filing: **13.05.81**

(54) **Improvements in or relating to plasma-arc cutting.**

(30) Priority: **14.05.80 CA 351896**

(43) Date of publication of application:
**02.12.81 Bulletin 81/48**

(45) Publication of the grant of the patent:
**25.07.84 Bulletin 84/30**

(84) Designated Contracting States:
**BE CH DE FR GB IT LI NL SE**

(56) References cited:
**EP - A - 0 009 532
DE - A - 2 452 174
DE - A - 2 505 665
DE - A - 2 807 303
FR - A - 2 440 807
GB - A - 735 875
GB - A - 881 121
US - A - 2 364 645
US - A - 3 203 683
US - A - 3 225 281
US - A - 3 851 864
US - A - 4 087 670**

(73) Proprietor: **UNION CARBIDE CANADA LIMITED
123 Eglinton Avenue East
Toronto Ontario, M4P 1J3 (CA)**

(72) Inventor: **Ross, John William
187 Hanna Road
Toronto, Ontario (CA)**
Inventor: **Raty, Pertti Tapani
51 Narden Crescent
Don Mills, Ontario (CA)**

(74) Representative: **Huntingford, David Ian et al,
W.P. THOMPSON & CO. Coopers Building Church
Street
Liverpool L1 3AB (GB)**

Courier Press, Leamington Spa, England.

## Description

This invention relates generally to the automatic cutting of predetermined shapes in metal plate employing a shape cutting machine, and has to do particularly with an improvement in the conventional plasma arc cutting process and to a method and apparatus for allowing the initial stand-off height of a plasma cutting torch head from the metal plate to be established when using said improved process.

The plasma arc cutting process, during the two decades or so since its development, has become a firmly established production tool in the metal fabrication industry. Its wide acceptance is the result of unique advantages such as the ability to cut any metal at relatively high cutting speeds. These advantages are made possible by features that are characteristic to this process only: namely the extremely high temperatures and high gas velocities which are needed to turn the more common electric arc into a plasma arc. Essentially, a plasma arc differs from the common electric arc in the following way. Whereas the electric arc cutting (or welding) process requires the electrical current to jump across an intervening air space between the cutting or welding head and the metal workpiece, the plasma arc process provides a high-velocity stream or jet of gas which is directed toward the workpiece, and which literally carries the current with it by virtue of being highly ionized. In effect, the gas is forced to pass first in front of an electrode contained in the cutting torch head, from where it passes in a high-velocity jet directly to and against the metal workpiece.

Despite the versatility of the plasma arc cutting process, and the high cutting speeds which it makes possible, the same characteristics which lead to these advantages also are associated with important drawbacks. For one, the high temperature utilized is responsible for the generation of toxic fumes such as ozone and oxides of nitrogen, and also produces fine metal particulate matter in the cutting fumes. The supersonic gas velocity, needed to blow out the molten metal in order to obtain high cutting speeds, is responsible for the high noise levels generated by the process. Finally, intense ultraviolet radiation is emitted by the arc. These characteristics, even though they have always been inseparable parts of the plasma arc cutting process, are receiving more scrutiny in this era of increased health and safety consciousness. The health hazards arising from these characteristics are presently the only real obstacle to an even wider acceptance of the plasma arc cutting process.

The conventional way of coping with the problems just mentioned was to employ a so-called water table under the metal plate being cut, and to make use of water mufflers. The principle here is that the smoke passing through and under the plate being cut was scrubbed by the water in a boxed-in table, while the noise level and the ultraviolet radiation were reduced by a water "curtain" generated around the lower end of the torch by a water muffler. These methods work well enough if there is no gap between the bottom of the plate and the underlying water table, but since the plates are seldom straight, gaps do occur and these allow fumes to escape from under the plate. Any such gaps also tend to act as echo chambers, and accentuate the noise generated by the process.

It is already known (see for example DE— 2 505 655) that noise, ultraviolet radiation and the generation of toxic materials can be significantly reduced in the conventional plasma arc cutting process, without interfering with the cutting process itself, by carrying out the cutting process under water which overlies the metal plate being cut. It has been established that the plasma arc cutting process is just as efficient under water as above water. By submerging the plate under about 50 mm of water, all three of the problem areas mentioned earlier are taken care of. It has been found that the noise level is reduced below about 85 dBA at 2 m, that the fumes are almost totally eliminated, and that the arc can be viewed without shaded shields. It has been found that the speed of cutting and the quality of the cut are unaffected by the total immersion.

The concept of submerging the workpiece under about 50 mm of water, however, raises certain problems in connection with the conventional control means utilized for operating the plasma torch in terms of its vertical position.

A conventional shape-cutting machine utilizing a plasma arc torch normally will shift the torch into general position above the plate prior to cutting. In such position, the torch would be several centimeters or more above the height that it will eventually employ for the cutting procedure. Once the torch has reached a position over the designated starting point on the plate, the shape cutting machine lowers the torch to the appropriate height for initiating the cutting procedure. Currently, several means are employed for signalling to the shape cutting machine that the torch has reached the appropriate cutting height. One of these involves capacitance. A capacitive plate is associated with the plasma arc torch head, and an electrical charge is applied between the capacitive plate and the workpiece. As these approach each other during descent of the plasma arc torch head, capacitance increases due to the fact that the two plates of the capacitor are approaching each other. The change in capacitance is detected electronically, and when the capacitance reaches a certain level which is precalibrated to correspond with a desired height for the torch above the workpiece, the downward movement of the torch is arrested, and the cutting procedure is initiated. Another procedure for bringing the torch to the correct working height above the workpiece is to use cutting fluid (water and/or gas) associated with the process. The cutting fluid thus blows against the top of the workpiece. The back pressure in the jet can be sensed, and as the torch nozzle approaches the surface of the workpiece, this back pressure will change. A sensing device then signals the shape cutting machine to stop the downward motion of the torch, so that the cutting can begin. A further procedure is the so-called pilot-arc sensing method, in which the proximity of the workpiece is sensed using the voltage and/or current between the torch and the workpiece.

It will be appreciated that the covering of the workpiece with for example 50 mm of water, effectively prevents all the above conventional control mechanisms for operating. It is therefore an object of this invention to provide a mechanism by which the initial height of the torch above the workpiece can be established, even though the workpiece may be covered by water. It will be appreciated from what follows that this particular mechanism can, however, be used also in the absence of any water.

It is known from U.K. Patent Specification No. 735 875 to control the height of a burner above a horizontal workpiece by the use of a touch finger device which makes intermittant contact with the workpiece and whose position controls the operation of a reversible electric motor to correspondingly control the position of the burner relative to the workpiece.

In accordance with one aspect of the present invention, there is provided a method of cutting a substantially horizontal metal plate by a plasma-arc cutting torch which has a lower working end defining an orifice through which high velocity ionised gas issues and whose horizontal position is controlled by a shape-cutting machine to cut said plate. The operational height of the cutting torch above said plate being determined by supporting the torch in a lowermost position with respect to a torch support device, lowering the torch support device and the torch towards the plate so that the torch eventually engages the plate, detecting when a predetermined degree of upward movement of the torch from said lowermost position has occurred following said engagement with the plate and then moving the torch support upwardly by a predetermined amount to bring the torch to its operational position above the plate.

In accordance with a second aspect of the present invention, there is provided a plasma-arc cutting apparatus for cutting a substantially horizontal metal plate, the apparatus including a torch support member which supports a plasma-arc torch, a first means for moving the torch support member towards and away from an underlying metal plate to be cut, and second means for moving the torch-support member horizontally so that the torch supported thereby can make a desired cut in the metal plate, wherein the torch is supported from said torch-support member by a mounting means which allows relative upward movement between the torch and the torch support member, said mounting means including stop means for establishing a lowermost position of the torch with respect to the torch support member, a detector for generating a signal upon detecting a predetermined degree of upward movement of the torch from said lowermost position, and means for communicating said signal to said first means to instruct the latter to move the torch support member upwardly to bring the torch to its operational position above the plate.

It will be appreciated that the aforegoing method and apparatus are particularly suited to the situation in which the cutting operation is to be carried out below water since the presence of the water does not impede the operation of the height controlling mechanism.

Three embodiments of this invention are illustrated in the accompanying drawings, by way of example only, in which like numerals denote like parts throughout the several views, and in which:

Figure 1 is a perspective view of a first plasma-arc cutting device incorporating the present invention;

Figure 2 is a horizontal sectional view taken at the line 2—2 in Figure 1;

Figures 3, 4 and 5 are elevational views looking along the arrow A in Figure 1, showing sequential stages in the adjustment operation for torch height;

Figures 6, 7 and 8 are sequential views of the operation of the mechanism which establishes the torch at the proper working height above the workpiece in a second embodiment of plasma-arc cutting device in accordance with this invention;

Figure 9 is a perspective view of the lower end of the plasma arc cutting torch; and

Figure 10 is a partly broken-away perspective view of the third embodiment of this invention.

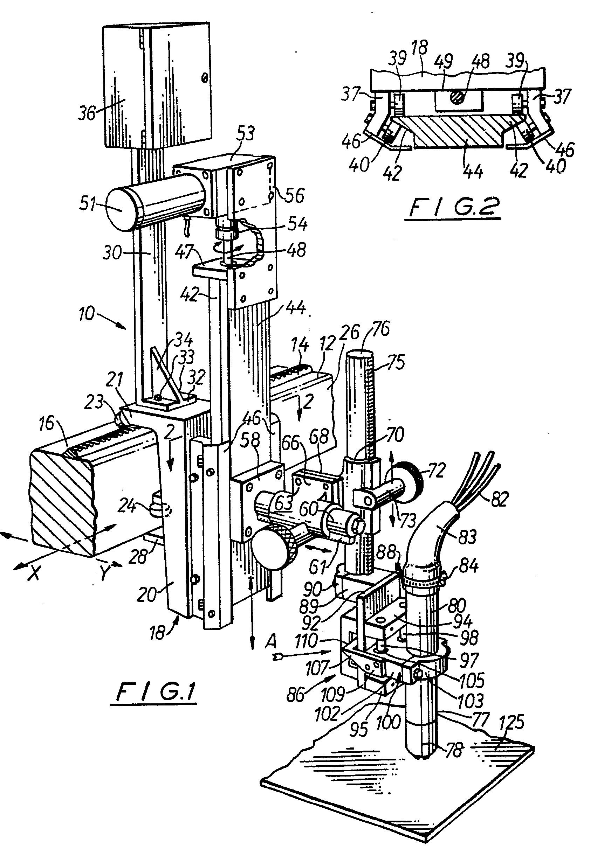

Turning first to Figure 1, the numeral 10 designates a portion of a conventional shape cutting machine, which includes a beam member 12 which is adapted to be moved by conventional means in a horizontal plate, with X-Y motion. The latter term designates motion in the horizontal plane, with the X and Y axes being perpendicular to each other. Arrows at the left in Figure 1, associated with the beam 12, show the X-Y arrangement. Since the means by which the beam 12 is moved in horizontal directions is conventional, the same does not have to be shown or described in this specification. As seen in Figure 1, the beam 12 is substantially rectangular in section, and supports a rack 14 on its upper surface 16.

Supported from the beam 12 and slidable therealong is a carriage 18 which includes a substantially vertical portion 20, and a substantially horizontal portion 21. The carriage 18 thus has an inverted L-shape. At the leftward or remote end of the portion 21 of the L-shaped carriage 18 are two rollers 23 (only one roller visible in Figure 1), which bear against and roll along the further edge of the rack 14, which is obliquely sloped and defines an obtuse angle with that part of the upper surface 16 which is on the other side of the rack 14 from the position of the viewer. Two bearing rollers 24 (only one visible in Figure 1) are supported from the vertical portion 20 of the L-shaped carriage 18, and bear against the vertical flank 26 of the beam 12. A bracket 28 is secured to the vertical portion 20 and extends therefrom horizontally at a location just under the bottom of the beam 12, thereby functioning as a carriage retainer, preventing the carriage 18 from being lifted vertically upwardly from the position in which it is shown in Figure 1. In order to remove the carriage 18 from the Figure 1 position, it would be first rotated in the counter-clockwise direction about the rollers 23, to bring the bracket 28 clear of the beam 12, and then the entire carriage 18 can be lifted upwardly away from the beam.

Located above and extending upwardly from the horizontal portion 21 of the carriage 18 is an L-shaped member 30 having a foot portion 32 secured to the portion 21 by suitable fastening members 33, and a triangular brace 34. At the top of the L-shaped member 30 there is supported a control box 36 containing the electronic control circuitry and related apparatus.

Referring to Figures 1 and 2 together, two obtuse-angled bar members 37 are welded vertically to the portion 20 of the carriage 18, at horizontally spaced-apart locations. Each bar member 37 supports two vertically spaced inner rollers 39 (see Figure 2), and two outer rollers 40 in horizontal alignment with the corresponding inner rollers 39. The outer rollers 40 are angulated with respect to the inner rollers 39, and are set to receive the acute-angled wings 42 of an elongated plate 44. As can be seen in Figure 2, the acute-angled wings 42 are received snugly between adjacent pairs of inner and outer rollers 39 and 40, and due to the angulation of the rollers a secure and stable grip on the plate 44 is provided, while permitting the plate 44 to move vertically with respect to the carriage 18. Two cover plates 46 are provided to protect the rollers 39 and 40, and for reasons of personnel safety.

At the top of plate 44 is an end plate 47 which projects inwardly (leftwardly) from the plate 44, and through which is journalled a shaft 48. The journalling of the shaft 48 in the end plate 47 is such as to permit the shaft 48 to rotate with respect therewith, but not to move in a longitudinal direction with respect thereto.

At a location on the portion 20 of the carriage 18 which is approximately mid-way of its height, there is provided a block 49, affixed to the carriage 18, and having a threaded vertical bore. The shaft 48 is threaded over most of its length except the uppermost end, and is adapted to threadedly engage the threaded bore in the block 49. Since the block is affixed with respect to the carriage 18, and since the shaft 48 is journalled in the end plate 47 in such a way that the shaft and the plate 44 retain the same longitudinal relationship, it will be understood that rotation of the shaft 48 with respect to the block 49 will cause the plate 44 to move upwardly or downwardly, depending upon the direct direction of rotation of the shaft 48.

Rotation of the shaft 48 is accomplished by an electrical motor 51 which operates through a reduction gearing mechanism 53 to rotate a coupling 54 to which the upper end of the shaft 48 is connected. The motor 51 is reversible, and therefore the same can be used both to raise and to lower the plate 44.

The housing of the reduction gearing mechanism 53 is supported with respect to the plate 44 by a support plate 56.

A mounting plate 58 bolted to the plate 44 supports a horizontal member 60 having a rack 61 along its lower edge. The member 60 extends horizontally at right angles from the plate 44, and it is cylindrical except for the location of the rack 61. A slide bracket 63 adapted to slide along the member 60, and its movement is manually controllable by virtue of a knurled knob 64 secured to a shaft (not visible) which is in turn secured to a pinion (not visible) whose teeth engage the rack 61. The slide bracket 63 is integral with a fastening base 66 which is in turn secured to the fastening base 68 of a slide bracket 70 which is rotated through 90° with respect to the slide bracket 63. The slide bracket 70 also includes a knurled, manually rotatable knob 72 which is connected with a shaft (not visible) within a cylindrical housing 73, the shaft being connected to a pinion of which the teeth engage the teeth of a further rack 75 which is affixed longitudinally to a slide member 76. The slide member 76 is oriented vertically, and is adapted to reciprocate vertically within the slide bracket 70, whenever the knob 72 is rotated.

Shown in Figure 1 is a plasma-arc cutting torch 77, which includes a metallic lower protective cap 78, and an elongated cylindrical body 80 which is typically of plastic or other non-metallic material. The internal operation and construction of the torch 77 is not pertinent to this invention, and will not be described here. Extending out the top of the body portion 80 are various gas supply tubes, cooling water tubes and the electrical connections, shown collectively by the numeral 82 in Figure 1. The attachment between these supply lines and the tube 80 is protected by a flexible sleeve 83 which may be of rubber or other suitable material. The sleeve 83 is secured to the body portion by a ring clamp 84.

A mounting means 86 is adapted to mount the cutting torch 77 with respect to the member 76 in a manner which allows relative up and down movement between the torch 77 and the member 76. The first embodiment of the mounting means 86 (that seen in Figures 1, 3, 4 and 5) includes a frame 88 which is fixed with respect to the member 76 by virtue of a bracket 89, the bracket 89 cooperating with a clamp 90 to grip the lower end of the member 76. The frame 88 includes a vertical plate 92 which supports two vertically spaced brackets 94 and 95, both extending to the same side of the plate 92 (rightwardly in Figure 1). The brackets 94 and 95 support the ends of two horizontally spaced vertical posts 97 and 98. Slidably supported for vertical motion along the posts 97 and 98 is a carriage 100 which includes a block member 102 and a clamp 103 cooperating with the block member 102 to grip and support the torch 77. As can be seen in Figure 1, the clamp 103 defines a part cylindrical portion which, together with a part cylindrical recess in the block 102 defines a cylindrical gap into which the torch 77 can be locked.

The block 102 has, mounted within it, two anti-friction, axial bearings 105 of conventional construction, adapted to receive and slide upon the posts 97 and 98.

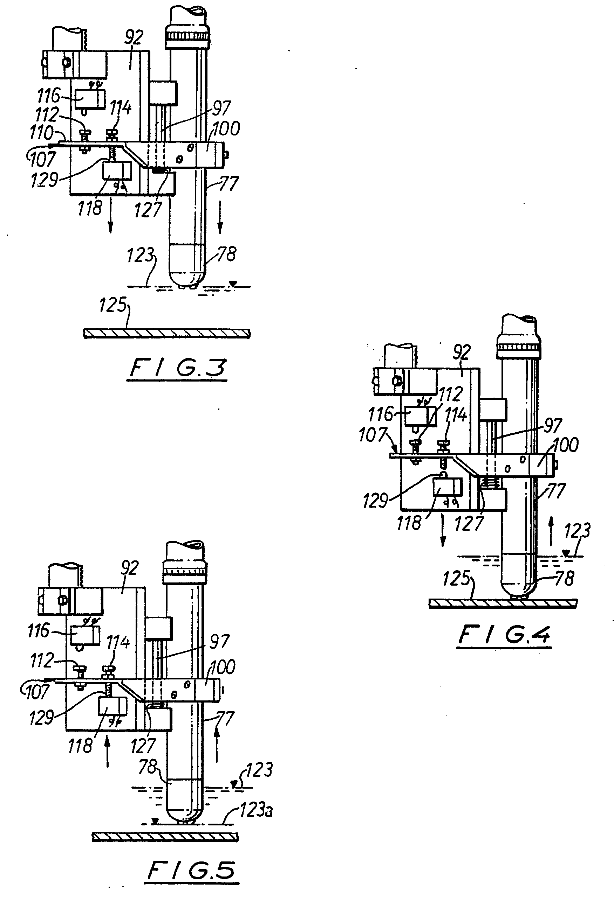

Secured to the block 102 is a switch-operating arm 107, which is substantially L-shaped and includes a mounting end 109 and a contact end 110. As best seen in Figures 3, 4 and 5, the contact end 110 of the switch-operating arm 107 is, in effect, cantilevered behind the plate 92, and supports two adjustable fastening members 112 and 114, which are adapted to operate microswitches 116 and 118, respectively, Microswitch 116 is a safety switch, which in normal operation would not be activated. Microswitch 118 acts as a primary detector, and its signal is used to control the direction of rotation of the reversible motor 51, in a manner which will be explained below.

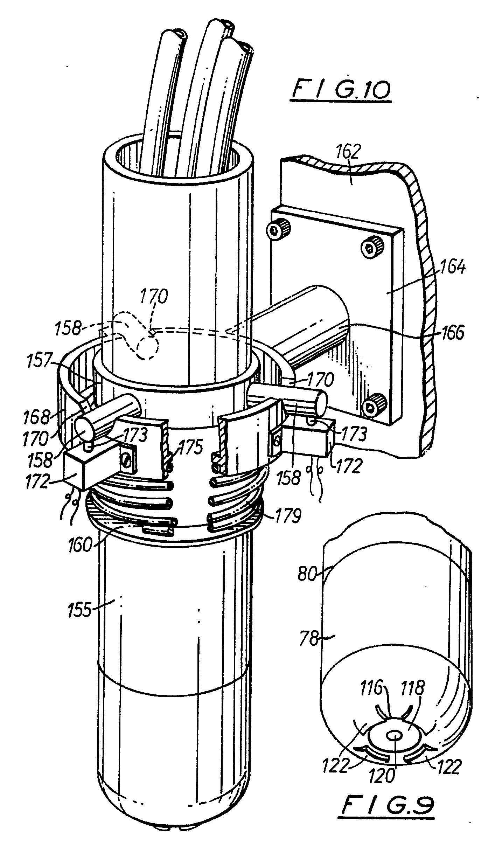

Before describing the operation of the apparatus referred to above, attention is directed to Figure 9, which shows the bottom end of a typical torch (turned upwardly in this figure), which has been modified for use with the method and apparatus disclosed herein. The cap 78 on the end of the body portion 80 defines an opening 116 which is sized to surround an insulative annular member 118 which is part of and supported from the internal structure of the torch. The cap 78 is normally internally threaded, and can be threaded on and off the body portion 80. When the cap 78 is removed, the annular member 118 remains in position. The annular member 118 defines a central orifice 120 through which the high-velocity ionised gas can issue during operating of the torch. In conventional cap constructions, the annular member 118 is the lowermost portion of the entire structure, and is not protected in any way from contact with the plate being cut. In conventional constructions, it is not necessary to protect the annular member 118, because the safety arrangements are such that the torch never comes into contact with the plate being cut. However, for safety reasons it would be of advantage to include this modified cap construction even in conventional systems.

However, for the operation of the method herein disclosed, it is necessary for the torch to come into contact with the plate being cut, prior to the beginning of the cutting operation, and for this reason the modified cap 78 seen in Figure 9 has four protuberances 122 which are spaced evenly around the annular member 118, and protrude to a level below the annular member 118 (it being understood that "below" in Figure 9 is seen as being above, since the torch is inverted). Thus, the annular member 118 is surrounded by metallic protuberances which eliminate the risk of contact between the fragile annular member 118 and the metal plate which is to be cut.

Referring to the procedure of this invention, it is emphasized that the method includes within its scope providing a layer of water over the plate which is intended to be cut by the plasma-arc cutting torch, and then employing such a torch, controlled by a shape-cutting machine, to cut the plate. During the cutting, the lower, working end of the torch 77 is positioned such that the orifice 120 is located below the general surface level of the water, whereby fumes, noise levels and escaping ultraviolet radiation are all reduced.

In Figures 3—5, a typical water level is shown at 123.

As previously described, a preferred but nonlimiting range of water depth above the plate is about 50 mm, although it will be understood that variations in the torch size and other factors may make it appropriate to utilize other water depths. Generally speaking, a depth between about 25 mm and about 75 mm would normally be selected.

As explained earlier in this specification, it is necessary for the shape-cutting machine, which is an automatic machine, to first establish the torch 77 at the proper predetermined working level above the plate which is to be cut. As also explained earlier, the presence of the water over the plate (identified by the numeral 125) makes it impossible to use conventional techniques to "tell" the logic of the machine when the torch has reached the appropriate predetermined spacing above the workpiece 125.

With reference to Figures 3, 4 and 5, the way in which the apparatus described earlier accomplishes this step will now be described.

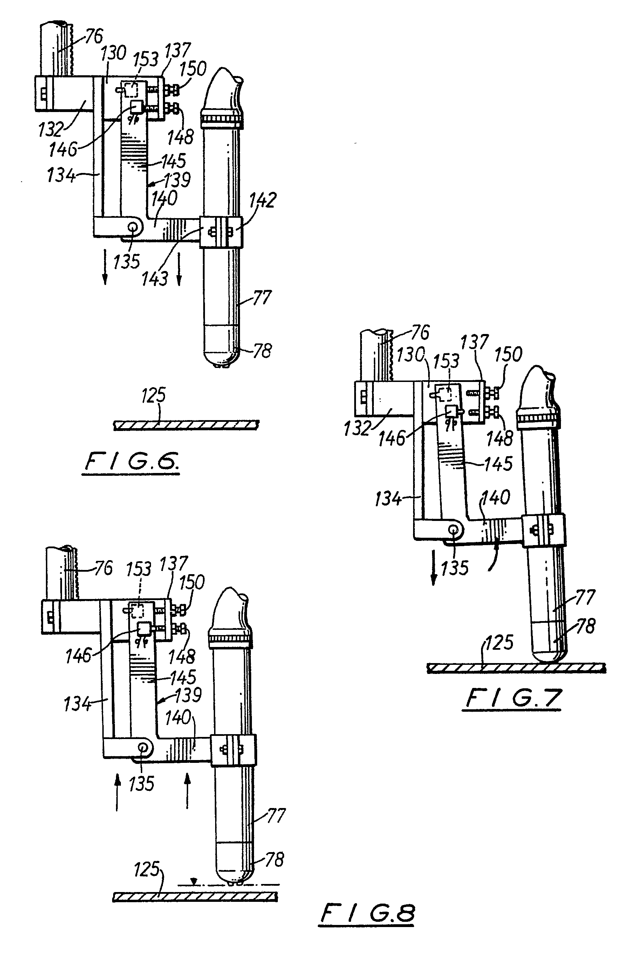

In Figure 3, the torch 77 is located at a substantial distance above the plate, greater than the normal predetermined working distance. It is to be understood that the shape-cutting machine would typically raise the torch to such a "safe" distance, then position the torch over the plate in alignment with a desired starting position, then lower the torch to the predetermined working level, and then begin the cutting operation. In Figure 3, the torch 77 is being lowered toward the plate 125. As can be seen, the carriage 100 is at the lowermost end of its possible travel with respect to the posts 97 and 98, and is resting upon washer members 127 enclosing the posts 97, 98 at the lower end thereof. In such position, the fastening member 114 which is adjustably secured to the contact end 110 of the switch operating arm 107 is depressing the contact 129 of the microswitch 118. The switch 118 is thus in a particular condition, and we will assume here that it is in the "closed" condition. The logic of the shape-cutting machine is adapted to receive a signal from the switch 118 corresponding to the "opening" thereof, and this takes place shortly after contact between the bottom end of the torch 77 and the workpiece 125. Attention is now directed to Figure 4, which shows the situation a short time after this contact has taken place. Upon initial contact, the switch 118 is still closed. However, a very small further downward movement of the plate 92, while the torch 77 and the carriage 100 remain stationary, will suffice to move the switch 118 downwardly away from the fastening member 114, thus allowing the switch 118 to open. This signal is picked up by the logic of the shape-cutting machine, which immediately signals the motor 51 to reverse its direction of rotation for a predetermined length of time, after which the motor 51 is shut off. The said predetermined length of time is exactly that necessary to raise the plate 92 along with the torch 77 to the condition shown in Figure 5, in which the lowermost end of the torch 77 is at the predetermined spacing above the workpiece 125, marked by line 123a.

The cutting operation can then begin, but this does not need to be described as it is entirely conventional.

Attention is now directed to Figures 6, 7 and 8, which illustrate an alternative embodiment of the mounting portion which is inserted between the torch 77 and the vertically elongated member 76. In the case of Figures 6—8, the apparatus is somewhat simplified. It can be seen to include a frame 130 which includes a mounting portion 132 gripping the lower end of the member 76 in the same manner as is done in Figures 3—5, a downwardly extending L-shaped bracket 134 which supports pivot location 135 that is fixed with respect to the frame 130, and a flange 137 which extends toward the viewer in Figures 6—8. The member 134 also is located toward the viewer with respect to the frame 130. Thus, the member 134, the flange 137 and the portion of the frame 130 between the latter two define a C-shaped configuration, with the ends of the "C" extending toward the viewer in these figures. A torch-holding member 139 is provided, the same being L-shaped and being pivoted to the member 134 at the pivot point 135. The pivot point 135 is located adjacent the elbow of the member 139. The torch-holding member 139 includes a horizontal arm 140 on the rightward or distal end of which the torch 77 is affixed by virtue of clamping members 142 and 143, and further has a vertical arm 145 which extends upwardly into the "C" shape defined between the flange 137, the member 134 and the portion of the frame 130 located between these two. A first microswitch 146 is affixed to the arm 145 and is adapted to be contacted by a first fastening member 148 which is secured to the flange 137. A stop adjustment fastening member 150 also passes through the flange 137 and is secured thereto, the arm 145 being aligned in such a way that it contacts the stop member 150 upon clockwise motion. When such contact takes place, the member 148 depresses the contact of the microswitch 146, thus placing the switch into a first condition. When the arm 145 swings in the counter-clockwise direction away from the flange 137, the microswitch 146 will go to its other condition because it will separate from the fastener 148.

It will be appreciated that, since the torch 77 is located such that its central axis is spaced horizontally from the pivot point 135, any upward force on the torch 77, as would occur when the torch during its descent contacted the workpiece 125, would cause the L-shaped torch-holding member 139 to swing in the counter-clockwise direction as seen in Figures 6—8, thus allowing the torch 77 to move upwardly with respect to the member 76, and also simultaneously moving the microswitch 146 leftwardly away from its contact with the member 148. This will place the microswitch 146 into its other condition, which the logic of the shape-cutting machine reads as a signal to reverse the motor 51, thus raising the member 76 and the torch 77 upwardly for a predetermined length of time, again selected so as to bring the bottom end of the torch 77 to a predetermined spacing above the workpiece 125. Contact between the torch 77 and the workpiece 125 is shown in Figure 7, and Figure 8 shows the torch 77 after it has been raised to the predetermined spacing above the workpiece 125.

A safety switch 153 is provided, also mounted on the upstanding or vertical arm 145 of the L-shaped torch-holding member 139. The safety switch 153 is adapted to contact the member 134, if for some reason the changing of the condition of the main microswitch 146 should fail to cause the motor 51 to reverse.

A particular advantage of the apparatus defined above becomes apparent when the plasma-arc torch is required to cut through a pre-existing kerf (a slot or cut) in the workpiece, and must approach the kerf at a small acute angle. Previously, difficulties were encountered in this connection due to the fact that the logic of the shape-cutting machine is conventionally arranged in such a way as to keep the torch 77 at a height which will bring about a pre-selected voltage-drop between the torch and the workpiece 125. This procedure is utilized in order to keep the torch at optimum height, regardless of whether the plate may be bent or in some form other than perfectly flat or horizontal. However, when the torch approaches and begins to cross a kerf at a small acute angle, the logic of the machine begins to "see" a rising voltage-drop, and in order to lower this voltage-drop it calls for the torch itself to be lowered. Thus, the machine is erroneously sensing a drop or decline in the plate. In conventional machines, this can lead to damaging of the torch when it comes into forceful contact with the workpiece. Such damage is unavoidable in conventional machines, because there is no play or slack between the torch and the guiding member to which it is attached, and no possibility for the torch to move vertically with respect to that member. The present invention overcomes this difficulty by providing a mechanism which allows up and down movement of the torch which respect to the primary guiding member, and further by providing the protective protuberances 122 (Figure 9) around the annular member 118 (the most likely portion to sustain damage).

Also, as soon as the bottom of the torth comes into contact with the workpiece, the main microswitch will change its condition, and this will signal the logic of the machine to reverse the motor and raise the torch upwardly to the original memorized stand-off.

Attention is now directed to Figure 10, in which a plasma-arc torch 155 is clamped inside a ring 157, the ring having three cylindrical outward projecting portions 158, located at 120° angles from each other.

Also secured to the torch 155 is an annular ring 160, the purpose of which will be discussed subsequently.

In Figure 10, a plate portion 162 may be taken to correspond with the vertical plate 92 shown in Figure 1, since both are adapted to be moved horizontally to follow the particular contour along which the plasma-arc cutting torch is intended to cut, and are also adapted to be moved in the vertical direction in order to bring the plasma-arc cutting torch down to an appropriate spacing with respect to the plate being cut. Thus, the plate portion 162 in Figure 10 may be considered to be attached to the bottom of the member 76 in Figure 1. Secured to the plate portion 162 is a rectangular plate 164 from which extends an arm 166, on the other end of which is located a collar 168 of larger diameter than the ring 157. The collar 168 has three V-shaped notches 170 at 120° intervals, in which the projecting portions 158 are intended to lodge. Mounted exteriorly of the collar 168, under each of the V-shaped notches 170, is a microswitch 172. Each microswitch 172 has a triggering member 173 which is depressed by the corresponding projecting portion 158, when the latter lies at the lowermost position in its repective V-shaped notch 170.

The collar 168 has an inward ledge 175, which defines with the annular ring 160 a space within which a compression coil spring 179 is located. The spring 179 tends to push its two ends apart, and this tends resiliently to press the torch 155 downwardly so that the projecting portions 158 lodge within the respective V-shaped notches 170.

During the operation of the cutting procedure, the initial lowering of the cutting torch 155 toward the plate to be cut will result in contact between the two, and this will lift all of the projecting portions 158 upwardly from their respective microswitch contacts. The microswitches 172 would be wired in such a way that a change of state for any one of them would send a signal to the logic of the machine instructing it to immediately lift the cutting torch upwardly to a predetermined level for cutting.

Conveniently, the appropriate hook-up would be one in which the microswitches were wired in series, and were normally closed when the corresponding projecting portion pressed down against the trigger member 173. In this way, the lifting up of any one of the projecting portions 158 would open the series circuit, and this would send a signal to the logic as aforesaid.

The arrangement shown in Figure 10 is also appropriate to allow the machine to lift up the torch upon sideward pressure at the bottom of the torch, for example due to the torch coming into contact with a side wall of the basin or tank within which the water is contained. Lateral or sideward pressure at the bottom of the torch 155 will cause a rotational moment in the region of the collar 168, and one or two of the projecting portions 158 will lift upwardly as a result. This will open one or two of the microswitches 172, and again the result will be that the machine will be instructed to lift the torch up to a predetermined level. It will be understood that this predetermined "safety" level could be different from the normal or "cutting" level at which the lower end of the torch would be under water in a cutting position.

## Claims

1. A method of cutting a substantially horizontal metal plate (125) by a plasma-arc cutting torch (77) which has a lower, working end defining an orifice through which high velocity ionised gas issues and whose horizontal position is controlled by a shape-cutting machine to cut said plate, characterised in that the operational height of the cutting torch above said plate is determined by supporting the torch (77) in a lowermost position with respect to a torch support device (88), lowering the torch support device (88) and the torch (77) towards the plate so that the torch eventually engages the plate, detecting when a predetermined degree of upward movement of the torch (77) from said lowermost position has occurred following said engagement with the plate and then moving the torch support (88) upwardly by a predetermined amount to bring the torch to its operational position above the plate.

2. A plasma-arc cutting apparatus for cutting a substantially horizontal metal plate, the apparatus including a torch support member (88) which supports a plasma-arc torch (77), a first means (18) for moving the torch support member (18) towards and away from an underlying metal plate (125) to be cut, and second means for moving the torch support member horizontally so that the torch supported thereby can make a desired cut in the metal plate, characterised in that the torch (77) is supported from said torch-support member (88) by a mounting means (86) which allows relative upward movement between the torch (77) and the torch support member (88), said mounting means (86) including stop means for establishing a lowermost position of the torch with respect to the torch support member (88), a detector (118) for generating a signal upon detecting a predetermined degree of upward movement of the torch from said lowermost position, and means for communicating said signal to said first means to instruct the latter to move the torch support member upwardly to bring the torch to its operational position above the plate.

3. An apparatus as claimed in claim 2, characterised in that the mounting means (86) includes a frame (88), a carriage (100), and vertical slide means by which the carriage (100) can move vertically with respect to the frame (88), the cutting torch (77) being mounted on the carriage (100).

4. An apparatus as claimed in claim 3, characterised in that said detector is an electrical switch (118) which is triggered by relative movement between the frame (88) and the carriage (100).

5. An apparatus as claimed in claim 3, characterised in that the frame (88) includes a vertical plate (92) supporting two vertically spaced brackets (94, 95) both extending to one side of the plate (92), the brackets (94, 95) supporting the ends of two horizontally spaced, vertical posts (97, 98), the carriage (100) having anti-friction axial bearings (105) surrounding the posts (97, 98) and slidable thereon, the carriage (100) having a portion supporting a vertically adjustable switch actuator (114), the plate (92) supporting, beneath said actuator (114), an electrical switch (118) constituting said detector, the switch (118) being positioned for actuation by said switch actuator (114).

6. An apparatus as claimed in claim 3, 4 or 5 characterised by a safety switch (116) adapted to be operated if the upward movement of the cutting torch (77) from said lowermost position exceeds said predetermined degree by a given amount.

7. An apparatus as claimed in claim 2, characterised in that the mounting means includes a frame (130), a torch-holding member (139) mounted for pivoting motion in a vertical plane with respect to said frame (130) about a pivot point (135), the torch-holding member (139) being adapted to support an elongate cutting torch (77) in substantially vertical orientation with the centre of the torch spaced horizontally from said pivot point (135), whereby upward force on the torch causes the torch to move upwardly as the torch-holding member (139) pivots about said pivot point (135), the frame (130) being fixed with respect to said support member.

8. An apparatus as claimed in claim 7, characterised in that the detector is an electrical switch (146) which is triggered by relative movement between said frame (130) and a portion of said torch-holding member (139).

9. An apparatus as claimed in claim 7, characterised in that the torch-holding member (139) is L-shaped and that said pivot point (135) is adjacent the elbow of the L-shape, the member (139) having a horizontal arm (140) to which the torch (77) is affixed, and a vertical arm (145) to which the detector (146) is affixed.

10. An apparatus as claimed in claim 7, 8 or 9, characterised in that there is further provided a safety switch (153) adapted to be activated if the upward movement of the cutting torch from said lowermost position exceeds said predetermined degree by a given amount.

11. An apparatus as claimed in any of claims 2 to 10, in which the plasma-arc cutting torch has a lower working end defining an orifice through which high-velocity ionised gas can issue, and further having sturdy guard means protruding below the level of the orifice so that the latter is shielded from contact with the metal plate being cut.

12. An apparatus as claimed in any of claims 2 to 10, characterised in that the plasma-arc cutting torch has a lower working end which includes an insulative annular member (118) defining an orifice (120) through which high-velocity ionised gas can issue, and further having a plurality of downward protuberances (122) spaced around said annular member (118) and protruding to a level below the annular member (118), whereby the annular member (118) is prevented from contacting the metal plate (125) being cut, whenever the torch (77) touches the plate (125).

**Patentansprüche**

1. Verfahren zum Schneiden oder Trennen einer im wesentlichen horizontalen Metallplatte (125) mit Hilfe einer Plasmalanze (77) mit unterem Arbeitsende mit Düse, durch welche ein ionisiertes Gas mit hoher Geschwindigkeit strömt und deren horizontale Stellung von einer Formschneidemaschine gesteuert wird, dadurch gekennzeichnet, daß die Arbeitshöhe der Lanze über der Platte bestimmt wird, indem die Lanze (77) gegenüber einer Lanzen-Halterung (88) in tiefster Stellung gehalten wird, die Lanzen-Halterung (88) und die Lanze (77) derart abgesenkt wird, daß die Lanze gegebenenfalls die Platte berührt, aufgezeichnet wird, wenn eine Aufwärtsbewegung der Lanze (77) von der untersten Stellung um ein vorbestimmtes Ausmaß stattgefunden hat, nachdem eine Berührung mit der Platte stattgefunden hatte, worauf schließlich die Lanzen-Halterung (88) um einen vorbestimmten Betrag angehoben wird, um die Lanze oberhalb der Platte in Arbeitsstellung zur bringen.

2. Vorrichtung zum Plasma-Schneiden einer im wesentlichen horizontalen Metallplatte aus einer Lanzen-Halterung (88) für eine Plasma-Lanze (77) einer ersten Einrichtung (18) um die Halterung (18) für die Lanze zu oder von der zu bearbeitenden Metallplatte (125) zu bewegen, und einer zweiten Einrichtung, um die Lanzenhalterung horizontal derart zu bewegen, daß die Lanze den gewünschten Schnitt auszuführen vermag, dadurch gekennzeichnet, daß die Lanze (77) von der Lanzen-Halterung (88) über eine Montageeinrichtung (86) getragen wird, die eine relative Aufwärtsbewegung zwischen Lanze (77) und Halterung (88) gestattet, und diese Montageeinrichtung (86) einen Anschlag für die Einstellung der untersten Stellung der Lanze gegenüber der Halterung (88), einen Detektor (118) für die Erzeugung eines Signals bei Ermittlung eines vorbestimmten Ausmaßes einer Aufwärtsbewegung der Lanze für diese unterste Position und, eine Einrichtung zur Weiterleitung des Signals zu der ersten Einrichtung aufweist, damit diese die Halterung anhebt, und so die Lanze oberhalb der Platte in Arbeitsstellung kommt.

3. Vorrichtung nach Anspruch 2, dadurch gekennzeichnet, daß die Montageeinrichtung einen Rahmen (88), einen Schlitten (100), und ein Vertikalgleitteil umfaßt, womit eine Vertikalbewegung des Schlittens gegenüber dem Rahmen (88) und damit der darauf befestigten Lanze (77) ermöglicht wird.

4. Vorrichtung nach Anspruch 3, dadurch gekennzeichnet, daß der Detektor ein elektrischer Schalter (118) ist, welcher durch die Relativbewegung von Rahmen (88) und Schlitten (100) getriggert wird.

5. Vorrichtung nach Anspruch 3, dadurch gekennzeichnet, daß der Rahmen (88) eine vertikale Platte (92), an der sich zwei vertikal im Abstand befindliche Arme (94, 95) an einer Seite der Platte (92) erstrecken und die Ende zweier horizontal im Abstand stehender vertikaler Träber (94, 95) tragen, aufweist, der Schlitten (100) axiale Gleitlager (105) um die Träger (97, 98) darauf gleitbar zu machen, besitzt und auf dem sich ein vertikal einstellbarer Schalter-Betätigungsteil (114) befindet, während die Platte (92) unterhalb des Betätigungteils (114) einen den Detektor darstellenden elektrischen Schalter (118) trägt, welcher so angeordnet ist, daß er den Schalter-Betätigungsteil (114) beaufschlagen kann.

6. Vorrichtung nach Anspruch 3, 4 oder 5, dadurch gekennzeichnet, daß ein Sicherheitsschalter (116) vorgesehen ist, der anspricht, wenn die Aufwärtsbewegung der Lanze (77) aus der untersten Stellung den vorbestimmten Betrag um einen gegebenen Wert überschreitet.

7. Vorrichtung nach Anspruch 2, dadurch gekennzeichnet, daß die Montageeinrichtung einen Rahmen (130) und einen Lanzen-Halter (139) für drehende Bewegung in vertikaler Ebene gegenüber dem Rahmen (130) um eine Lagerspitze (135), aufweist und der Lanzen-Halter (139) eine langgestreckte Lanze (77) in im wesentlichen vertikaler Richtung mit der Mitte der Lanze in horizontalem Abstand von der Lagerspitze zu halten vermag, wobei eine nach oben gerichtete Kraft auf die Lanze diese zu einer Aufwärtsbewegung zwingt, wenn der Lanzen-Halter (139) sich um die Lagerspitze (135) schwenkt, und der Rahmen (130) gegenüber diesem Tragteil fixiert ist.

8. Vorrichtung nach Anspruch 7, dadurch gekennzeichnet, daß der Detektor ein elektrischer Schalter (146) ist, der durch die Relativbewegung von Rahmen (130) und einem Teil des Lanzen-Halters (139) getriggert wird.

9. Vorrichtung nach Anspruch 7, dadurch gekennzeichnet, daß der Lanzen-Halter L-förmig und die Lagerspitze (135) dem Winkel des L zugekehrt ist und der Lanzen-Halter (139) einen horizontalen Arm (140), an dem die Lanze (77) befestigt ist, und einen vertikalen Arm (145), an dem der Detektor (146) fixiert ist, aufweist.

10. Vorrichtung nach Anspruch 7, 8 oder 9, dadurch gekennzeichnet, daß zusätzlich ein Sicherheitsschalter (153) vorgesehen ist, der anspricht, wenn die Aufwärtsbewegung der Lanze von der untersten Stellung den vorbestimmten Betrag um einen gegebenen Wert überschreitet.

11. Vorrichtung nach einem der Ansprüche 2 bis 10, dadurch gekennzeichnet, daß die Plasma-Lanze ein unteres Arbeitsende mit Düse für ionisiertes Gas hoher Geschwindigkeit aufweist und zusätzlich eine robuste Abdeckung vorhanden ist, die sich unter die Düse derart erstreckt, daß leiztere von einer direkten Berührung mit der zu bearbeitenden Metallplatte geschützt ist.

12. Vorrichtung nach einem der Ansprüche 2 bis 10, dadurch gekennzeichnet, daß die Plasma-Lanze ein unteres Arbeitsende mit einem Isolierring (118) um eine Düse (120) für ionisiertes Gas hoher Geschwindigkeit aufweist und darüberhinaus eine Anzahl von nach unten reichenden um den Isolierring (118) im Abstand angeordneten und nach unten den Isolierring überragenden Vorsprünge (122) vorgesehen sind, durch die der Isolierring (118) von einer Berührung mit der zu bearbeitenden Metallplatte (125), wenn die Lanze (77) diese berührt, geschützt ist.

**Revendications**

1. Appareil de coupage d'une plaque de métal sensiblement horizontale (125) au moyen d'une torche (77) de coupage au jet de plasma avec arc transféré qui présente une extrémité inférieure de travail définissant un orifice par lequel sort à grande vitesse un gaz ionisé et dont la position horizontale est commandée par une machine de découpage afin de couper ladite plaque, caractérisé en ce que la hauteur de fonctionnement de la torche de coupage au-dessus de ladite plaque est déterminée par support de la torche (77) dans la position la plus basse par rapport à un dispositif (88) de support de torche, descente du dispositif (88) de support de torche et de la torche (77) vers la plaque de manière que la torche finisse par entrer en contact avec la plaque, détection du moment où un degré prédéterminé de mouvement de montée de la torche (77) à partir de ladite position la plus basse se produit après ladite entrée en contact avec la plaque, puis déplacement du support (88) de torche vers le haut sur une distance prédéterminée pour amener la torche dans sa position de fonctionnement au-dessus de la plaque.

2. Appareil de coupage au jet de plasma avec arc transféré pour couper une plaque métallique sensiblement horizontale, l'appareil comprenant un élément (88) de support de torche qui supporte une torche (77) à jet de plasma avec arc transféré, des premiers moyens (18) destinés à déplacer l'élément (18) de support de torche afin de le rapprocher et de l'éloigner d'une plaque métallique sousjacente (125) à couper, et des seconds moyens destinés à déplacer l'élément de support de torche horizontalement afin que la torche qu'il supporte puisse réaliser une coupe souhaitée dans la plaque métallique, caractérisé en ce que la torche (77) est supportée par ledit élément (88) de support de torche à l'aide de moyens (86) de montage qui permettent un mouvement relatif de montée entre la torche (77) et l'élément (88) de support de torche, lesdits moyens (86) de montage comprenant des moyens de butée destinés à établir la position la plus basse de la torche par rapport à l'élément (88) de support de torche, un détecteur (118) destiné à générer un signal à la suite de la détection d'un degré prédéterminé de mouvement de montée de la torche à partir de ladite position la plus basse, et des moyens destinés à transmettre ledit signal auxdits premiers moyens pour instruire ces derniers de déplacer vers le haut l'élément de support de torche afin d'amener la torche dans sa position de fonctionnement au-dessus de la plaque.

3. Appareil selon la revendication 2, caractérisé en ce que les moyens de montage (86) comprennent un bâti (88), un chariot (100), et des moyens coulissants verticaux à l'aide desquels le chariot (100) peut se déplacer verticalement par rapport au bâti (88), la torche (77) de coupage étant montée sur le chariot (100).

4. Appareil selon la revendication 3, caractérisé en ce que ledit détecteur est un interrupteur électrique (118) qui est déclenché par un mouvement relatif entre le bâti (88) et le chariot (100).

5. Appareil selon la revendication 3, caractérisé en ce que le bâti (88) comprend une plaque verticale (92) supportant deux consoles (94, 95) espacées verticalement, s'étendant toutes deux vers un premier côté de la plaque (92), les consoles (94, 95) supportant les extrémités de deux colonnes verticales (97, 98) espacées horizontalement, le chariot (100) comportant des paliers axiaux anti-friction (105) entourant les colonnes (97, 98) et glissant sur elles, le chariot (100) comportant une partie supportant un actionneur (114) d'interrupteur, réglable verticalement, la plaque (92) supportant, au-dessous dudit actionneur (114), un interrupteur électrique (118) constituant ledit détecteur, l'interrupteur (118) étant positionné pour être actionné par ledit actionneur (114) d'interrupteur.

6. Appareil selon la revendication 3, 4 ou 5, caractérisé par un interrupteur (116) de sécurité conçu pour être manoeuvré si le mouvement de montée de la torche (77) de coupage à partir de ladite position la plus basse dépasse d'une quantité donnée ledit degré prédéterminé.

7. Appareil selon la revendication 2, caractérisé en ce que les moyens de montage comprennent un bâti (130), un porte-torche (139) monté de façon à pouvoir pivoter dans un plan vertical par rapport audit bâti (130) autour d'un point (135) de pivotement, le porte-torche (139) étant conçu pour supporter une torche allongée (77) de coupage dans une orientation sensiblement verticale, le centre de la torche étant espacé horizontalement dudit point (135) de pivotement, de manière qu'une force exercée vers le haut sur la torche provoque un mouvement vers le haut de la torche en même temps que le porte-torche (139) pivote autour dudit point (135) de pivotement, le bâti (130) étant fixe par rapport audit élément de support.

8. Appareil selon la revendication 7, caractérisé en ce que le détecteur est un interrupteur électrique (146) qui est déclenché par un mouvement relatif entre ledit bâti (130) et une partie dudit porte-torche (139).

9. Appareil selon la revendication 7, caractérisé en ce que le porte-torche (139) est de forme en L et en ce que ledit point (135) de pivotement est adjacent au coude de forme en L, l'élément (139) comportant un bras horizontal (140) auquel la torche (77) est fixée, et un bras vertical (145) auquel le détecteur (146) est fixé.

10. Appareil selon la revendication 7, 8 ou 9, caractérisé en ce qu'il comporte en outre un interrupteur (153) de sécurité conçu pour être actionné si le mouvement de montée de la torche de coupage à partir de ladite position la plus basse dépasse d'une quantité donnée ledit degré prédéterminé.

11. Appareil selon l'une quelconque des revendications 2 à 10, dans lequel la torche de coupage au jet de plasma avec arc transféré présente une extrémité inférieure de travail définissant un orifice par lequel peut sortir à grande vitesse un gas ionisé, et comportant en outre des moyens robustes de protection dépassant au-dessous du niveau de l'orifice afin que ce dernier soit protégé de tout contact avec la plaque métallique en cours de coupage.

12. Appareil selon l'une quelconque des revendications 2 à 10, caractérisé en ce que la torche de coupage au jet de plasma avec arc transféré présente une extrémité inférieure de travail qui comprend un élément annulaire isolant (118) définissant un orifice (120) par lequel peut sortir à grande vitesse un gaz ionisé, et comportant en outre plusieurs saillies (122) orientées vers le bas, espacées autour dudit élément annulaire (118) et dépassant jusqu'à un niveau situé au-dessous de l'élément annulaire (118), de manière que l'élément annulaire (118) ne puisse entrer en contact avec la plaque métallique (125) en cours de coupage lorsque la torche (77) touche la plaque (125).

0 040 925

FIG.2

FIG.1

1

FIG.3

FIG.4

FIG.5

F I G.6.

F I G.7

F I G.8

F I G. 10

F I G. 9